# FASCICULE DE BREVET EUROPEEN

(11) **EP 1 291 568 B1**
(45) Date de publication et mention de la délivrance du brevet: **07.06.2006**
(21) Numéro de dépôt: 02356171.5
(22) Date de dépôt: 06.09.2002
(51) Int. Cl.: F16L 33/18, F16L 33/207

(54) **Raccord instantané pour tubes déformables**
Schnellkupplung für verformbare Rohre
Quick-acting coupling for deformable pipes

(30) Priorité: 06.09.2001 FR 0111544
(43) Date de publication de la demande: 12.03.2003
(73) Titulaire: COMAP, 69008 Lyon (FR)
(72) Inventeur: Le Clinche, Pascal, 69008 Lyon (FR)
(74) Mandataire: Maureau, Philippe

(56) Documents cités:
- EP-A- 0 942 219
- EP-A1- 1 258 665
- DE-U- 9 110 998
- US-A- 3 245 699

## Description

La présente invention a pour objet un raccord instantané pour tubes déformables, tels que des tubes en matériau composite comprenant une âme métallique, par exemple en aluminium, revêtue de couches de matière synthétique, par exemple de polyéthylène réticulé. De tels types de tubes sont utilisés de plus en plus fréquemment dans la réalisation d'installation de chauffage, pour conduire l'eau chauffée par une chaudière, ainsi que dans les installations sanitaires, pour conduire l'eau sanitaire chaude ou froide.

Des raccords instantanés pour tubes sont connus de longue date, par exemple par le document EP 0 021 795. Dans un tel raccord, chaque tube traverse un élément d'accrochage comportant des griffes ainsi qu'un joint d'étanchéité. L'accrochage du tube et l'étanchéité sont réalisés à l'extérieur du raccord.

Dans le cas de tubes déformables, tels que les tubes en matériaux composites précités, il convient de réaliser un bon accrochage du tube dans le raccord, ainsi qu'une bonne étanchéité malgré le caractère déformable du tube. Le but de l'invention est de fournir un raccord instantané assurant à la fois un bon accrochage et une bonne étanchéité tout en étant compact. En outre, dans la mesure où le raccord est destiné à des tubes composite comportant une âme en aluminium, il convient d'éviter les contacts entre l'âme en aluminium et le fluide, sur la section du tube, et d'éviter les contacts entre le système d'accrochage et la couche d'aluminium.

Le document EP-A-0 942 219 qui décrit un raccord conforme au préambule de la revendication 1, concerne un raccord instantané comprenant un corps tubulaire sur lequel est destinée à être engagée une extrémité d'un tube, qui est recouverte d'une douille déformable par pression, pour fixer le tube sur le corps avec un serrage différent des deux joints interposés entre le corps et le tube.

Un autre raccord instantané est connu par le document EP-A-1 258 665, qui appartient à l'état de la technique selon l'article 54(3) CBE.

A cet effet, le raccord selon l'invention comporte les caractéristiques de la partie caractérisante de la revendication 1.

Chaque tube destiné a être fixé dans le raccord est simplement emmanché sur une partie tubulaire du raccord. Il doit être noté tant l'étanchéité que l'accrochage sont réalisés au niveau de l'intérieur du tube. Si, après montage, une traction est exercée sur le tube, le tube tend à entraîner vers l'extrémité libre de la partie tubulaire considérée la bague fendue, laquelle tend à augmenter de section par appui de sa face inclinée contre la face inclinée de la gorge du corps dans laquelle elle est logée. Il en résulte une augmentation de la résistance à l'arrachement du tube, qui ne peut pas être dégagé du raccord. Le joint étant disposé du côté de l'extrémité libre de la partie tubulaire, l'étanchéité demeure parfaitement assurée. Le sertissage par une bague métallique assure une parfaite tenue du tube.

D'autres caractéristiques de l'invention ressortent des autres revendications.

En ce qui concerne le joint, il peut s'agir d'un joint torique, ou d'un joint à une ou plusieurs lèvres.

De toute façon l'invention sera bien comprise, à l'aide de la description qui suit, en référence aux dessins schématiques annexés représentant, à titre d'exemples non limitatifs, plusieurs formes d'exécution de ce raccord.
Figure 1 est une vue en perspective d'un raccord destiné à la liaison entre deux tubes, dont une extrémité est munie d'une coiffe et dont l'autre extrémité ne comporte pas de coiffe;
Figure 2 est une vue en coupe longitudinale du raccord de figure 1, dans lequel un tube est engagé dans la partie du raccord équipé d'une coiffe ;
Figure 3 est une vue en perspective d'une bague d'accrochage du raccord de figures 1 et 2 ;
Figure 4 est une vue en perspective d'une seconde bague d'accrochage ;
Figure 5 est une vue en perspective d'un joint du raccord de figures 1 et 2;
Figure 6 est une vue en coupe par un plan diamétrale du joint de figure 5;
Figure 7 est une vue en coupe similaire à figure 6 d'un autre type de joint; et
Figures 8 et 9 sont des vues en coupe longitudinale de deux raccords selon l'invention équipés de bagues de sertissage.

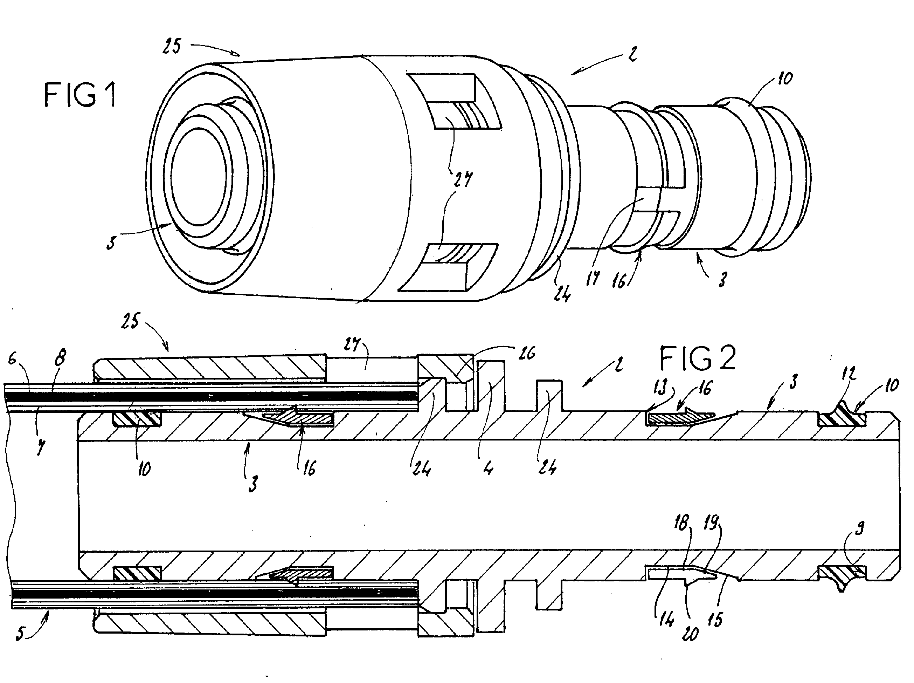

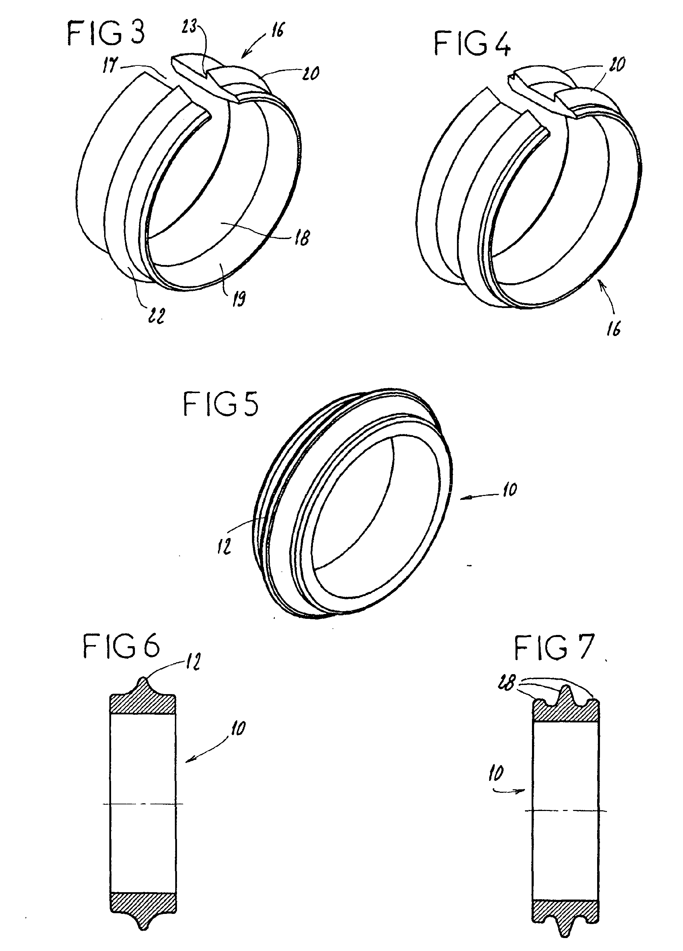

Le raccord représenté aux figures 1 et 2 comprend un corps 2, par exemple en matière synthétique, présentant deux parties tubulaires 3 coaxiales 3, séparées l'une de l'autre par un épaulement central et transversal 4. Le corps 2 est tubulaire, et son diamètre extérieur correspond au diamètre intérieur d'un tube composite 5 comportant une âme 6 en aluminium revêtue sur ses faces intérieure et extérieure de deux couches de matière synthétique 7 et 8, par exemple en polyéthylène réticulé ou non.

Chaque partie tubulaire 3 étant identique, seule l'une d'entre elles est décrite ci-après. Une partie tubulaire 3 comprend, à partir de son extrémité libre, une gorge 9, servant au logement d'un joint 10 comportant une seule lèvre 12, ce joint étant représenté en détail aux figures 5 et 6.

Du côté du milieu du raccord, chaque partie tubulaire 3 comporte une gorge 13 présentant du milieu du raccord vers l'extrémité libre de la partie tubulaire, une zone avec un fond 14 parallèle à l'axe de cette partie tubulaire prolongée en direction de l'extrémité libre de cette partie tubulaire par une face inclinée 15 de l'intérieur vers l'extérieur, et du milieu du raccord vers l'extrémité libre de la partie tubulaire. Cette gorge 13 sert au logement d'une bague 16, par exemple en matière synthétique Cette bague 16, représentée plus en détail à la figure 3, est de préférence mais non exclusivement, une bague ouverte par une fente axiale 17. Cette bague présente une surface d'appui 18 sur la surface 14 de la gorge 13, et une surface 19 de même inclinaison que la surface 15 de la gorge 13, destinée à venir en appui contre cette dernière. Dans la forme d'exécution représentée aux figures 1 à 3, la bague 16 comporte, en tant que moyens d'accrochage, une arête périphérique continue 20 saillant vers l'extérieur et délimitée par une surface 22 inclinée de l'intérieur vers l'extérieur et de l'extrémité libre du raccord vers le milieu de celui-ci, et une face 23 sensiblement perpendiculaire à l'axe de la partie tubulaire considérée, située du côté du milieu du raccord. Chaque partie tubulaire comporte également une collerette périphérique 24 destinée à former une butée axiale pour un tube 5 en position montée sur le raccord. Dans la forme d'exécution représentée au dessin, cette collerette fait partie intégrante du corps 2.

De façon connue, ce raccord comprend également, entourant chaque partie tubulaire, une coiffe tubulaire 25 rigide, fixée sur le corps, de diamètre intérieur correspondant au diamètre extérieur du tube. Cette coiffe a pour fonction d'assurer un parfait maintien du tube 5, notamment si celui-ci est déformable. La coiffe 25 présente, à son extrémité située du côté du milieu du corps, une partie 26 courbée vers l'intérieur, formant un crochet venant s'engager derrière une collerette 24, assurant ainsi un montage irréversible de la coiffe sur le corps. Bien entendu, tout autre mode d'assemblage entre le corps et la coiffe pourrait être envisagé tel que, par exemple, mais non exclusivement, par sertissage d'une pièce métallique ou encore par des filets aménagés sur la coiffe et le corps. Des fenêtres 27 sont prévues dans la coiffe 25, à proximité de la collerette 24, pour visualiser le bon emmanchement d'un tube 5 sur le raccord.

En pratique, l'opérateur engage un tube 5 sur le corps 2, dans l'espace compris entre une partie tubulaire 3 de celui-ci et une coiffe 25, jusqu'à ce que le tube soit en appui contre une collerette 24. Ce mouvement est rendu possible compte tenu de la déformabilité radiale de la bague d'accrochage 16. En position emmanchée, l'arête 20 de la bague 16 pénètre dans la couche intérieure 7 du tube 5, et assure la retenue de celui-ci. L'étanchéité au fluide est réalisée à l'aide du joint 10. Si l'on tente de retirer le tube de façon accidentelle ou non, la face inclinée 19 de la bague prend appui sur la face inclinée 15 de la gorge 13, ce qui tend à augmenter le diamètre de la bague fendue 16 et à améliorer l'accrochage de la bague dans la couche intérieure 7 du tube, rendant impossible le retrait de celui-ci.

La figure 4 représente une variante de la bague 16, dans laquelle sont prévues deux arêtes 20, parallèles et décalées axialement l'une par rapport à l'autre.

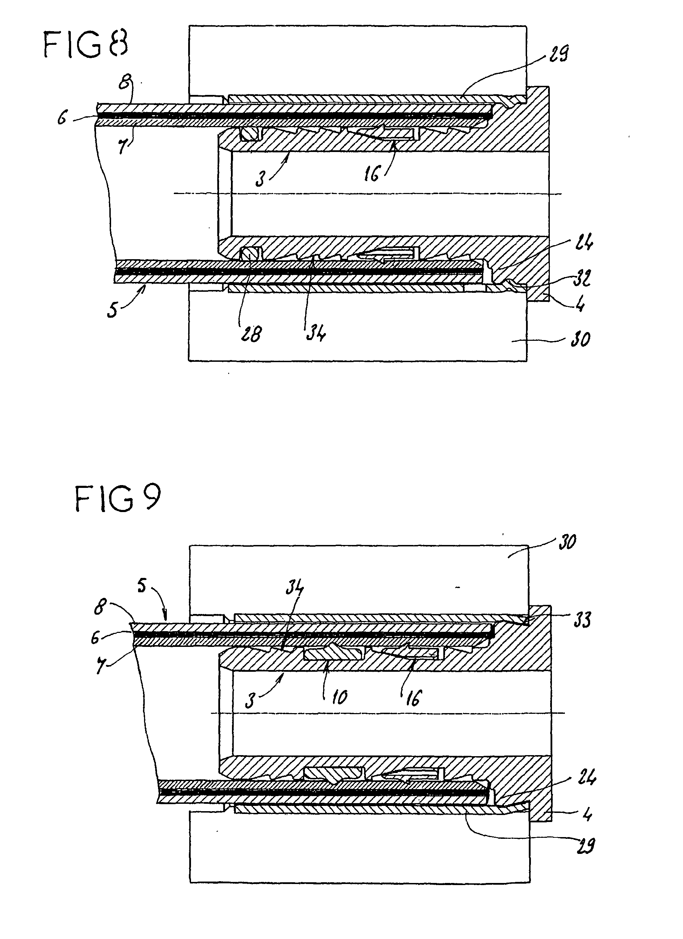

La figure 7 représente un joint 10 comportant plusieurs lèvres 28.

Les figures 8 et 9 représentent deux formes d'exécution du raccord selon l'invention dans lesquelles les mêmes éléments sont désignés par les mêmes références que précédemment.

Dans la forme d'exécution représentée à la figure 8, la partie tubulaire 3 est munie, sur sa face extérieure, d'un joint d'étanchéité 28 de section circulaire. La tenue de l'extrémité du tube 5 est assurée par sertissage d'une bague métallique 29 à l'aide de mâchoires 30. Une zone d'extrémité de la bague 29 prend appui sur la face extérieure de la collerette 24, et est retenue sur celle-ci par accrochage dans une rainure circulaire 32. Un crantage 34 ménagé à la surface extérieure de la partie tubulaire 3 favorise également la retenue du tube 5.

Dans la forme d'exécution représentée à la figure 9, la retenue de la bague métallique 29 sur la face extérieure de la collerette 24 est réalisée par accrochage dans un évidemment 33 adjacent à l'épaulement 4.

Comme il va de soi, l'invention ne se limite pas aux seules formes d'exécution de ce raccord, décrites ci-dessus à titre d'exemples, elle en embrasse au contraire toutes les variantes selon les revendications. C'est ainsi notamment que ce raccord pourrait être un raccord en T, et comporter trois parties tubulaires destinées à recevoir trois tubes. Par ailleurs, ce raccord pourrait ne pas comporter de coiffe tubulaire si les tubes à raccorder sont suffisamment rigides. De même, le joint pourrait être un joint torique, ou plusieurs joints pourraient être prévus, sans que l'on sorte pour autant du cadre de l'invention.

De plus, selon l'exemple illustré, les moyens d'accrochage de la bague comprennent une arête continue. Toutefois, les moyens d'accrochage pourraient comprendre une ou plusieurs arêtes discontinues ou non. De même, les moyens d'accrochage pourraient être réalisés de tout autre manière appropriée dans la mesure où ils sont aptes à engendrer une adhérence, de la bague 16 sur le tube à raccorder 5, suffisante pour que la bague puisse suivre les déplacements du tube notamment lors d'un mouvement de retrait du tube. Ainsi, les moyens d'accrochage pourraient également être réalisés sous la forme d'un moletage croisé définissant une surface rugueuse d'accrochage de la bague sur le tube.

## Revendications

1. Raccord instantané pour tubes déformables, tels que notamment des tubes en matériau composite comprenant une âme métallique, par exemple en aluminium, revêtue de couches de matière synthétique, par exemple de polyéthylène réticulé le raccord comprenant, un corps rigide (2) comportant, pour le raccordement de chaque tube (5), une partie tubulaire (3) de diamètre extérieur correspondant au diamètre intérieur du tube (5), dans laquelle sont ménagées une première gorge périphérique (9), située du côté de l'extrémité libre de la partie tubulaire, servant de logement à un joint (10) destiné à assurer l'étanchéité avec l'intérieur du tube, et une seconde gorge périphérique (13), **caracterisé en ce que** dans la seconde gorge périphérique (13) est logée une bague d'accrochage (16) présentant sur une surface extérieure des moyens d'accrochage (20) destinés à coopérer avec la surface intérieure du tube (5), la bague d'accrochage (16) étant une bague susceptible de se déformer radialement, et la seconde gorge (13) du corps (2) et la bague d'accrochage (16) présentant des faces d'appui complémentaires (15, 19) inclinées chacune de l'intérieur vers l'extérieur et en direction de l'extrémité libre de la partie tubulaire considérée, le raccord comportant, pour chaque partie tubulaire (3) pour le raccordement d'un tube (5), une bague de sertissage (29), de diamètre intérieur correspondant au diamètre extérieur du tube.

2. Raccord instantané selon la revendication 1, **caractérisé en ce que** chaque partie tubulaire (3) pour le raccordement d'un tube (5), comporte une collerette (24) destinée à former une butée axiale pour le tube (5) en position montée sur le raccord.

3. Raccord instantané selon la revendication 2, **caractérisé en ce que** le diamètre extérieur de la collerette (24) est inférieur ou égal au diamètre intérieur de la bague de sertissage (29).

4. Raccord instantané selon la revendication 3, **caractérisé en ce qu'**une zone d'extrémité de la bague de sertissage (29) est sertie sur la face extérieure de la collerette (24) avec accrochage dans au moins une rainure annulaire (32) ou un évidemment (33) que comporte cette collerette (24).

5. Raccord instantané selon l'une des revendications 2 à 4, **caractérisé en ce que** chaque collerette (24) fait partie intégrante du corps (2).

6. Raccord instantané selon l'une des revendications 2 à 4, **caractérisé en ce que** chaque collerette (24) est distincte du corps (2) et fixée sur celui-ci.

7. Raccord instantané selon la revendication 6, **caractérisé en ce que** le corps est métallique et chaque collerette est en matière synthétique.

8. Raccord instantané selon l'une des revendications 1 à 7, **caractérisé en ce que** chaque bague d'accrochage (16) comprend, en tant que moyens d'accrochage, au moins une arête périphérique (20) saillant vers l'extérieur et délimitée d'une part par une surface (22) inclinée de l'intérieur vers l'extérieur et d'une extrémité du raccord vers le milieu de celui-ci, du côté d'introduction du tube et d'autre part par une surface (23) sensiblement perpendiculaire à l'axe de la partie tubulaire considérée, du côté du milieu du raccord.

9. Raccord instantané selon l'une des revendications 1 à 8, **caractérisé en ce que** les moyens d'accrochages comprennent au moins une arête (20) saillant vers l'extérieur et destinée à pénétrer la surface intérieure du tube (5).

## Claims

1. A quick coupling for deformable pipes, such as in particular pipes of composite material comprising a metal core, for example of aluminium, coated with layers of synthetic material, for example crosslinked polyethylene, the coupling comprising a rigid body (2) comprising, for coupling of each pipe (5), a tubular part (3) with an outer diameter corresponding to the inner diameter of the pipe (5), in which tubular part (3) there are formed a first peripheral channel (9), situated in the vicinity of the free end of the tubular part and serving to accommodate a gasket (10) designed to ensure a seal with the inside of the pipe, and a second peripheral channel (13), **characterised in that** in the second peripheral channel (13) there is accommodated a catch ring (16) exhibiting on one outer surface catch means (20) designed to cooperate with the inner surface of the pipe (5), the catch ring (16) being a ring capable of radial deformation, and the second channel (13) in the body (2) and the catch ring (16) exhibiting complementary bearing faces (15, 19) each inclined from the inside towards the outside and in the direction of the free end of the tubular part in question, the coupling comprising, for each tubular part (3) for coupling of a pipe (5), a crimping ring (29) with an inner diameter corresponding to the outer diameter of the pipe.

2. A quick coupling according to claim 1, **characterised in that** each tubular part (3) for coupling of a pipe (5) comprises a flange (24) designed to form an axial limit stop for the pipe (5) when fitted on the coupling.

3. A quick coupling according to claim 2, **characterised in that** the outer diameter of the flange (24) is less than or equal to the inner diameter of the crimping ring (29).

4. A quick coupling according to claim 3, **characterised in that** one end zone of the crimping ring (29) is crimped onto the outer face of the flange (24), catching in at least one annular groove (32) or recess (33) exhibited by said flange (24).

5. A quick coupling according to any one of claims 2 to 4, **characterised in that** each flange (24) is an integral part of the body (2).

6. A quick coupling according to any one of claims 2 to 4, **characterised in that** each flange (24) is distinct from the body (2) and fixed thereon.

7. A quick coupling according to claim 6, **characterised in that** the body is made of metal and each flange is of synthetic material.

8. A quick coupling according to any one of claims 1 to 7, **characterised in that** each catch ring (16) comprises, as catch means, at least one peripheral ridge (20) projecting outwards and defined on one hand by a surface (22) inclined from the inside towards the outside and from one end of the coupling towards the middle thereof, on the side on which a pipe is introduced, and on the other hand by a surface (23) which is substantially perpendicular to the axis of the tubular part in question, on the side facing the middle of the coupling.

9. A quick coupling according to any one of claims 1 to 8, **characterised in that** the catch means comprise at least one ridge (20) projecting outwards and designed to penetrate the inner surface of the pipe (5).

## Patentansprüche

1. Schnellkupplung für verformbare Rohre wie insbesondere Rohre aus Verbundwerkstoff mit einem, beispielsweise aus Aluminium bestehenden, Metallkern, der mit, beispielsweise aus vernetztem Polyethylen bestehenden, Kunststoffschichten überzogen ist, wobei die Kupplung einen starren Körper (2) umfasst, der zum Anschluss jedes Rohrs (5) einen rohrförmigen Abschnitt (3) mit einem Außendurchmesser umfasst, der dem Innendurchmesser des Rohrs (5) entspricht, in welchem Abschnitt eine erste umlaufende Vertiefung (9), die sich auf der Seite des freien Endes des rohrförmigen Abschnitts befindet und als Aufnahme für eine Dichtung (10) dient, die dazu bestimmt ist, die Dichtigkeit mit dem Inneren des Rohrs sicherzustellen, und eine zweite umlaufende Vertiefung (13) ausgebildet sind,
**dadurch gekennzeichnet, dass**
in der zweiten umlaufenden Vertiefung (13) ein Rastring (16) untergebracht ist, der auf einer Außenfläche Einhakeinrichtungen (20) aufweist, die dazu bestimmt sind, mit der Innenfläche des Rohrs (5) zusammenzuwirken,
wobei der Rastring (16) ein Ring ist, der sich radial verformen läßt, und die zweite Vertiefung (13) des Körpers (2) und der Rastring (16) komplementäre Anlageflächen (15, 19) aufweisen, die jeweils von innen nach außen und in der Richtung des freien Endes des betreffenden rohrförmigen Abschnitts geneigt sind,
wobei die Kupplung für jeden rohrförmigen Abschnitt (3) zum Anschluss eines Rohrs (5) einen Quetschring (29) mit einem Innendurchmesser umfasst, der dem Außendurchmesser des Rohrs entspricht.

2. Schnellkupplung nach Anspruch 1,
**dadurch gekennzeichnet, dass**
jeder rohrförmige Abschnitt (3) zum Anschluss eines Rohrs (5) einen Flansch (24) umfasst, der dazu bestimmt ist, in der an der Kupplung angebrachten Stellung einen axialen Anschlag für das Rohr (5) zu bilden.

3. Schnellkupplung nach Anspruch 2,
**dadurch gekennzeichnet, dass**
der Außendurchmesser des Flanschs (24) kleiner als der oder gleich dem Innendurchmesser des Quetschrings (29) ist.

4. Schnellkupplung nach Anspruch 3,
**dadurch gekennzeichnet, dass**
ein Endbereich des Quetschrings (29) auf die Außenfläche des Flanschs (24) aufgepresst ist, wobei er sich in mindestens eine ringförmige Nut (32) oder eine Ausnehmung (33) einhakt, die dieser Flansch (24) umfasst.

5. Schnellkupplung nach einem der Ansprüche 2 bis 4,
**dadurch gekennzeichnet, dass**
jeder Flansch (24) integrierter Bestandteil des Körpers (2) ist.

6. Schnellkupplung nach einem der Ansprüche 2 bis 4,
**dadurch gekennzeichnet, dass**
jeder Flansch (24) vom Körper (2) verschieden und an diesem befestigt ist.

7. Schnellkupplung nach Anspruch 6,
**dadurch gekennzeichnet, dass**
der Körper aus Metall und jeder Flansch aus Kunststoff besteht.

8. Schnellkupplung nach einem der Ansprüche 1 bis 7,
**dadurch gekennzeichnet, dass**
jeder Rastring (16) als Einhakeinrichtungen mindesten einen umlaufenden Steg (20) umfasst, der nach außen vorsteht und einerseits von einer von innen nach außen geneigten Fläche (22) und einem Ende der Kupplung zu deren Mitte hin auf der Einführseite des Rohrs, und andererseits von einer Fläche (23) begrenzt ist, die von der Seite der Mitte der Kupplung im Wesentlichen senkrecht zur Achse des betreffenden rohrförmigen Abschnitt ist.

9. Schnellkupplung nach einem der Ansprüche 1 bis 8,
**dadurch gekennzeichnet, dass**
die Einhakeinrichtungen mindestens einen Steg (20) umfassen, der nach außen vorsteht und dazu bestimmt ist, die Innenfläche des Rohrs (5) zu durchdringen.
